# EUROPÄISCHE PATENTANMELDUNG

(11) **EP 2 394 601 A1**
(43) Veröffentlichungstag der Anmeldung: **14.12.2011**
(21) Anmeldenummer: 10405114.9
(22) Anmeldetag: 11.06.2010
(51) Int. Cl.: A61C 3/06

(54) **Werkzeug für die Bearbeitung von Oberflächen dentaler Materialien**

(71) Anmelder: Intensiv SA, 6926 Montagnola (CH)
(72) Erfinder: Smailus, Günter, 6927 Agra (CH)
(74) Vertreter: AMMANN PATENTANWÄLTE AG BERN

(57) **Zusammenfassung**

Das Werkzeug für die Bearbeitung mit Flüssigkeit von dentalen Materialien weist einen Abrasivkörper auf, der ein Trägermaterial und darin eingebettete Abrasivkörner enthält. Zwecks vibrationsfreier Bearbeitung mit einer höheren Effizienz als vorbekannte Werkzeuge, ist das Trägermaterial aus Wasser aufnehmende Zellulose gefertigt.

## Beschreibung

Die vorliegende Erfindung bezieht sich auf ein Werkzeug für die Bearbeitung mit Flüssigkeit von dentalen Materialien mit einem Abrasivkörper, der ein Trägermaterial und darin eingebettete Abrasivkörner aufweist. Als Dentalwerkzeuge kommen die verschiedensten, an sich bekannten Werkzeuge mit einem Abrasivkörper in Frage, wie z.B. Bürsten gemäss US-6 312 257B1 oder EP-1 384 418B1 oder Polierwerkzeuge gemäss EP-0 972 495A1 sowie eine sehr grosse Anzahl von weiteren Werkzeugen gemäss diversen Katalogen verschiedenster Firmen zur Bearbeitung von dentalen Oberflächen.

Das Material, in welches die Abrasivpartikel eingebettet sind, der Abrasivpartikelträger, besteht gemäss dem bekannten Stand der Technik aus Kunststoffen, Silikonen, faserverstärkten Kunststoffen, Metallen und anderen dazu geeigneten Materialien. Das Funktionsprinzip solcher vorbekannten Abrasivkörper beruht auf einer festen Verankerung der Abrasivpartikel im Träger, welcher an der zu bearbeitenden Oberfläche abgerieben wird, wodurch die Abrasivpartikel sukzessive frei und damit aktiv werden können. Das heisst, dass die Abrasivkörper infolge Abnutzung des Trägermaterials zum Einsatz gelangen.

Die Füllmenge der Abrasivpartikel führt zu einer Verhärtung der obgenannten Trägermaterialien. Das führt bei der Anwendung auf synthetische oder natürliche dentale Oberflächen zu hohen Rotationsvibrationen. Dies ist für den Zahnarzt und Patienten äusserst unangenehm. Weiterhin sind die Ergebnisse nur proportional zu der aufgewendeten Zeit und dem Abrieb des Trägermaterials zu erreichen und somit nicht optimal.

Beispielsweise werden gemäss Stand der Technik Dental-Bürsten mit Borsten aus Keflar oder Nylon hergestellt, wobei die Keflarborsten mit Diamantpartikeln und die Nylonborsten mit Aluminiumoxid gefüllt werden. Dadurch wird die Bearbeitung gemäss oben dargelegtem Funktionsprinzip durchgeführt, wobei die Abrasivpartikel durch Abnutzung der Borsten freigesetzt werden. Für Polierer in fester oder flächenförmiger Ausgestaltung werden in der Regel eine Silikonmasse verwendet, in welcher die Diamantpartikel eingebettet sind und die nach dem gleichen Funktionsprinzip arbeiten, d.h. auch hier durch sukzessive Freisetzung der Abrasivkörner.

Es ist von diesem bekannten Stand der Technik ausgehend Aufgabe der vorliegenden Erfindung, Werkzeuge zur Behandlung dentaler Oberflächen anzugeben, die einerseits ein störungsfreies, insbesondere vibrationsfreies Arbeiten gewährleisten und andererseits eine höhere Bearbeitungseffizienz erzielen. Diese Aufgabe wird mit dem Werkzeug gemäss Patentanspruch 1 gelöst. Weitere Vorteile und Ausgestaltungen sind in den abhängigen Ansprüchen beschrieben.

Die Erfindung wird im Folgenden erläutert. Die Lösung der eingangs gestellten Aufgabe beinhaltet, ein Trägermaterial auf Zellulosebasis zu verwenden. In einer von der Firma smartfiber AG veröffentlichten Broschüre wird die Herstellung von funktionalen Werkstoffen auf Zellulosebasis erläutert, wobei unter anderem als eines der Anwendungsgebiete Polierborsten für die Hartmetall- und Saphirbearbeitung sowie Schleifborsten zur Entgratung vorgeschlagen werden. Dabei wird besonders hervorgehoben, dass keine Erweichungs- bzw. Schmierproblematik entstehen soll.

Versuche mit ähnlichen Zellulose-Filamenten und Schichten haben überraschenderweise ergeben, dass im Gegensatz zu den vorgeschlagenen Anwendungen für die Industrie, bei welcher jegliche Erweichung vermieden werden soll, gerade die Fähigkeit, Flüssigkeit, in der Regel Wasser, aufzunehmen einen ausschlaggebenden Vorteil bei der Bearbeitung von Oberflächen von Dentalmaterialien spielt. Dies ist insbesondere wichtig, da praktisch alle Bearbeitungen von Dentaloberflächen, d.h. von natürlichen oder künstlichen Zähnen, mit Wasserspülung durchgeführt werden.

Eine besondere Fähigkeit von Zellulosefasern liegt in der Aufnahme einer relativ grossen Menge von Feuchtigkeit, und es hat sich überraschenderweise ergeben, dass beispielsweise solche Filamente auf Zellulosebasis bei feucht werden sehr effizient für die Bearbeitung von dentalen Oberflächen sind. Ein Grund liegt darin, dass die Abrasivkörner, z.B. Diamantkörner, beim Aufquellen der Zellulose zahlreiche Körner freigelegt werden und von Anfang an ihre volle Wirksamkeit entfalten können.

Die Aufnahme von Wasser führt dazu, dass die von Natur aus bereits weiche Zellulose zu einer "super-soft" Konsistenz verändert wird, wodurch bei der Anwendung als Bürstchen mit Diamantbestückten Filamenten eine Vor- und Nachpolitur möglich ist. Dabei ist die Rotationsvibration nicht mehr spürbar. Darüber hinaus wird das Ergebnis, z.B. Glanz und Rauigkeit bei der Politur, signifikant verbessert.

Wie bereits erwähnt, eignet sich das neue Trägermaterial auf Zellulosebasis besonders auch in Form von Filamenten, die gebündelt in kleinen Bürstchen zur Politur von zahnmedizinischen Werkstoffen wie Komposit oder Keramik aller Art und von natürlichen Zähnen geeignet sind. Es sind auch weitere Anwendungen dieses Materials auf Zellulosebasis auf Flächensubstraten wie Kunststoffe oder Papier aller Art in Form von Streifen, Scheiben, Feilen und dergleichen in beliebiger Grösse möglich. Ausserdem kann das Zellulose-Material auch auf runde rotierbare Träger aufgebracht werden. Dabei kann die Abrasivkörper gemäss der nicht vorveröffentlichten europäischen Patentanmeldung EP-101 62 150.6 auf einen Kern aufgebracht werden, der eine ähnliche Form wie die Aussenform des Dentalwerkzeugs aufweist.

Zusätzlich zu den Abrasivkörnern können dem Abrasivkörper aktive und passive Wirkstoffe wie Silberionen, Zink, Fluoride, Keramik oder Kohlenstoffe beigemengt werden, um z.B. antibakteriell, Silberionen, Zink, zu wirken, einen zusätzlichen Kariesschutz, Fluoride, zu unterstützen und die Festigkeit der Filamente zu verstärken, Keramik, Kohlenstoffen.

## Patentansprüche

1. Werkzeug für die Bearbeitung mit Flüssigkeit von dentalen Materialien mit einem Abrasivkörper, der ein Trägermaterial und darin eingebettete Abrasivkörner aufweist, **dadurch gekennzeichnet, dass** das Trägermaterial auf Zellulose-Basis hergestellt ist.

2. Werkzeug nach Anspruch 1, **dadurch gekennzeichnet, dass** das Trägermaterial auf Zellulose-Basis als Borsten einer Dental-Bürste vorliegt, wobei die Abrasivkörner darin eingebettet sind.

3. Werkzeug nach Anspruch 1, **dadurch gekennzeichnet, dass** der Abrasivkörper mit dem Trägermaterial auf Zellulose-Basis auf Substratflächen wie Kunststoffe oder Papier aller Art in Form von Streifen, Scheiben, Feilen aufgebracht ist.

4. Werkzeug nach Anspruch 1, **dadurch gekennzeichnet, dass** der Abrasivkörper mit dem Trägermaterial auf Zellulose-Basis auf rotierbare Unterlagen aufgebracht ist.

5. Werkzeug nach Anspruch 4, **dadurch gekennzeichnet, dass** der Abrasivkörper auf einem Kern aufgebracht ist, der ähnlich der Oberfläche des Werkzeuges ausgebildet ist.

6. Werkzeug nach einem der Ansprüche 1 bis 5, **dadurch gekennzeichnet, dass** dem Abrasivkörper aktive und passive Wirkstoffe wie Silberionen, Zink, Fluoride, Keramik oder Kohlenstoffe beigemengt werden.
